(19) Europäisches Patentamt
European Patent Office
Office européen des brevets

(11) **EP 3 280 924 B1**

(12) **EUROPEAN PATENT SPECIFICATION**

(45) Date of publication and mention
of the grant of the patent:
**13.02.2019 Bulletin 2019/07**

(51) Int Cl.:
***F16C 35/04*** *(2006.01)*    ***F16C 23/08*** *(2006.01)*

(21) Application number: **15714841.2**

(86) International application number:
**PCT/EP2015/057891**

(22) Date of filing: **10.04.2015**

(87) International publication number:
**WO 2016/162093 (13.10.2016 Gazette 2016/41)**

(54) **PEDESTAL BEARING HOUSING AND ASSOCIATED BEARING ASSEMBLY**

BOCKLAGERGEHÄUSE UND ZUGEHÖRIGE LAGERANORDNUNG

BOÎTIER DE PALIER SUPPORT ET ENSEMBLE PALIER ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.02.2018 Bulletin 2018/07**

(73) Proprietor: **SNR Wälziager GmbH**
**33719 Bielefeld (DE)**

(72) Inventors:
• **HERMANN, Waldemar**
**33100 Paderborn (DE)**
• **THIESSEN, Gennadij**
**32105 Bad Salzuflen (DE)**
• **KOOP, Jakob**
**32791 Lage (DE)**

(74) Representative: **Alatis**
**109 Bd Haussmann**
**75008 Paris (FR)**

(56) References cited:
**WO-A1-97/12157        WO-A1-2011/065882**
**WO-A1-2013/085448    CN-U- 202 012 574**
**FR-A1- 2 878 301**

**Description**

**TECHNICAL FIELD OF THE INVENTION**

The present invention relates to a pedestal bearing housing for accommodating a bearing, and to a bearing assembly including such a pedestal bearing housing and a bearing accommodated in the pedestal bearing housing.

**BACKGROUND ART**

Bearing assemblies for guiding a shaft usually include a bearing received in a housing. The bearing can be of any type, e.g. a plain bearing or a roller bearing with rolling bodies of various shapes, including balls, needles, cylindrical rollers, barrel rollers, tapered rollers and spherical rollers. The pedestal bearing housing is an intermediate stationary part, which supports the rotating part and can be fixed to a support structure, e.g. a planar base. The pedestal bearing housings can be subjected to relatively high dynamic stress at frequencies that can vary considerably with the rotation speed of the shaft. These stresses should be not result in vibration of the pedestal bearing housing, which would be transmitted to the bearing and to the shaft or to the base. Hence, the pedestal bearing housing should have a high stiffness. However, the pedestal bearing housing should simultaneously minimise the amount of material used.

In order to meet both requirements, it has be proposed in WO 2013/085448 to provide a pedestal bearing housing comprising a substantially cylindrical bearing seat configured to receive a bearing, and a foot member adapted to support said bearing seat and having a generally planar lower surface formed by end surfaces of outer and inner supporting walls configured to be connected to an external support structure, wherein the inner supporting walls extend between the outer supporting walls forming cavities there between, wherein at least one of the inner supporting walls comprises at least one protrusion along its axial extension. By providing at least one protrusion on at least one of the inner supporting walls, the contact surface to the external support structure may be increased. Hereby, the pedestal bearing housing may have an increased stiffness and thereby being able to distribute the forces emanating from the bearing during use in a more suitable manner. However, substantial deformations of the bearing seat and high stress zones in some parts of the pedestal bearing housing are still experienced, in particular when a radial load is applied in a direction at an angle with the plane of symmetry of the pedestal bearing housing.

Another pedestal bearing housing with the feature of the preamble of claim 1 is illustrated in CN202012574U. The pedestal bearing housing further comprises an intermediate portion that extends between the bearing seat and the support plane and between the two flange portions. The intermediate portion includes at least a median foot protruding from the bearing seat towards the support plane. The median foot provides a median support surface that lies in the support plane and is part of the planar support surface. The pedestal bearing housing is provided with four slanted inner reinforcing walls which form a cross and extend from one of the two intermediate outer transverse walls to the intermediate portion, away from the median foot.

**SUMMARY OF THE INVENTION**

The invention aims to provide an improved pedestal housing structure that avoids or limits stress concentrations and weak points so that the pedestal bearing housing can sustain higher loads.

According to a first aspect of the invention, there is provided a pedestal bearing housing comprising a bearing seat, two attachment flange portions extending between the bearing seat and a support plane, the two attachment flange portions protruding on opposite sides of a median longitudinal plane perpendicular to the support plane, each of the two attachment flange portions including an upper flange wall protruding away from the median longitudinal plane, an outer longitudinal supporting wall and an inner longitudinal supporting wall extending in a direction parallel to the median longitudinal plane, and two outer transverse supporting walls each extending from the outer longitudinal supporting wall to the inner longitudinal supporting wall, the outer longitudinal supporting wall, inner longitudinal supporting wall and outer transverse walls extending from the upper flange wall towards the support plane and having edges that lie in the support plane to form at least part of a planar support surface of the pedestal bearing housing, a flange cavity being provided between the upper flange wall, outer longitudinal supporting wall, inner longitudinal supporting wall, outer transverse walls and support plane, the upper flange wall being provided with at least one through hole which opens into the flange cavity, wherein the pedestal bearing housing further comprises two transverse ribs each extending at least from the bearing seat to the inner longitudinal supporting wall of a respective one of the two flange portions, in a common transversal reference plane perpendicular to the median longitudinal plane and to the support plane and located between the two outer transverse supporting walls of each of the two flange portions. Each of the transverse ribs transfers part of the load from the bearing seat to the associated inner longitudinal supporting wall so that the stress field in the region of the upper flange wall is less critical.

According to a preferred embodiment, the bearing seat defines a surface of revolution about a revolution axis, parallel to the support plane and contained in the median longitudinal plane, to receive a bearing.

According to a preferred embodiment, each of the two transverse ribs has a lower free edge that lies at a distance from the support plane. Preferably, the lower free edge of each of the two transverse ribs has a concave cross-section in the transversal reference plane. The transverse ribs operate like arch-buttresses between the bearing seat and the inner longitudinal supporting walls.

According to a preferred embodiment, the pedestal bearing housing further comprises an intermediate portion that extends between the bearing seat and the support plane and between the two flange portions. The intermediate portion includes at least a median foot protruding from the bearing seat towards the support plane and having a median support surface that lies in the support plane and is part of the planar support surface, and each of the two ribs extends from the inner longitudinal supporting wall of the respective one of the two flange portions to the median foot. The median foot supports a substantial part of the radial load on the pedestal bearing housing. Moreover, part of the load transmitted by the bearing seat to the ribs is transferred to the median foot, which further limits the stress in the flange portions.

According to a preferred embodiment, the lower free edge of each of the two transverse ribs has a convex intermediate portion, a concave end portion between the convex intermediate portion and the median foot and a concave end portion between the convex intermediate portion and the inner longitudinal supporting wall of the respective one of the two flange portions. The concave end portion between the convex intermediate portion and the inner longitudinal supporting wall is preferably at an angle of between 35° and 50° to the median longitudinal plane. The concave end portion between the convex intermediate portion and the median foot is preferably at an angle of between 3° and 10° to the median longitudinal plane. Preferably,

$$3 \leq \frac{D_1}{D_2} \leq 7$$

where:

- D1 is the maximal distance D1 between the from the support plane (300) and the concave end portion between the convex intermediate portion and the inner longitudinal supporting wall,

- D2 is the minimal distance between the support plane and the convex intermediate portion, in a transition area between the convex intermediate portion and the concave end portion between the convex intermediate portion and the median foot.

According to one embodiment, the intermediate portion further includes two intermediate outer transverse walls each extending from one of the flange portions to the other of the two flange portions. The intermediate outer transverse walls interconnect the two flange portions to avoid undesired deformation of the housing. Each of the two intermediate transverse walls can be parallel to, and preferably coplanar with, one of the two outer transverse walls of each of the two flange portions. The median foot lies between the two intermediate outer transverse walls. One or more intermediate cavities are provided between the intermediate outer transverse walls, and the inner longitudinal wall of each of the two flange portions. The pedestal of the housing is essentially hollow, which is particularly advantageous in terms of weight and quantity of material. The two intermediate outer transverse walls reinforce the overall structure of the pedestal and connect the two flange portions with one another. Preferably, the two intermediate outer transverse walls extend from the bearing seat towards the support plane and have edges that lie in the support plane to form part of the planar support surface of the pedestal. The two intermediate outer transverse walls contribute to the transfer of the load to the base on which the pedestal housing is fixed.

According to one embodiment, the intermediate portion further includes at least two inner reinforcing walls each extending from one of the two intermediate outer transverse walls to the median foot. This limits bending of the intermediate outer transverse walls. Preferably, the at least two inner reinforcing walls extend from the bearing seat towards the support plane and have edges that lie in the support plane to form part of the planar support surface of the pedestal. The two inner reinforcing walls contribute to the transfer of the load to the base on which the pedestal housing is fixed.

According to one embodiment, the at least two inner reinforcing walls include at least two walls perpendicular to the outer intermediate transverse walls. According to another embodiment, the at least two inner reinforcing walls include at least two slanted inner reinforcing walls each at an angle of between 30° and 60° to the outer intermediate transverse walls. Preferably, the at least two inner reinforcing walls include at least four slanted inner reinforcing walls each at an angle of between 30° and 60° to the outer intermediate transverse walls and forming a cross. The cross between the intermediate outer transverse walls, combined with the inner and outer longitudinal walls, provides a very stiff structure.

According to one embodiment, the bearing seat has two axial ends, located on each side and at equal distance of the transversal reference plane. In most applications, the dynamic load applied to the bearing seat is maximal in a central part of the bearing seat and the deformations are also potentially greater in this region, and it particularly advantageous to provide the reinforcement of the ribs in this region. According to one embodiment, the transversal reference plane is closer to a first geometrical plane containing one of the two outer transverse walls of each of the two flange portions than to a second geometrical plane containing another one of the two outer transverse walls of each of the two flange portions.

Preferably, the pedestal bearing housing is made of ductile cast iron.

Preferably, the pedestal bearing housing comprises a cap and a pedestal, which comprises the pedestal flange portions, the cap and pedestal being fixed to one another, preferably by removable fastening elements such as bolts, the bearing seat formed by walls of the cap and pedestal.

According to another aspect of the invention, there is provided a bearing assembly comprising a pedestal bearing housing as described hereinbefore and at least one outer bearing ring fitted into the bearing seat. According to one embodiment, the outer bearing ring has a spherical race having a centre located in the transversal reference plane. Preferably the outer bearing ring has two end walls perpendicular at equal distance from the transversal reference plane.

## BRIEF DESCRIPTION OF THE FIGURES

Other advantages and features of the invention will then become more clearly apparent from the following description of a specific embodiment of the invention given as non-restrictive examples only and represented in the accompanying drawings in which:

- Figure 1 is a longitudinal cross section of a bearing assembly according an embodiment of the invention, cut by the plane I-I of Fig. 2;

- Figure 2 is a cross section of a pedestal bearing housing of the bearing assembly of figure 1 cut by the plane II-II of Fig. 1;

- Figure 3 is a view from below of the pedestal bearing housing of Fig. 2;

- Figure 4 is an isometric view of the pedestal bearing housing of Fig. 2;

- Figure 5 is view from below of a pedestal bearing housing according to another embodiment of the invention.

Corresponding reference numerals refer to the same or corresponding parts in each of the figures.

## DETAILED DESCRIPTION OF PREFERRED EMBODIMENTS

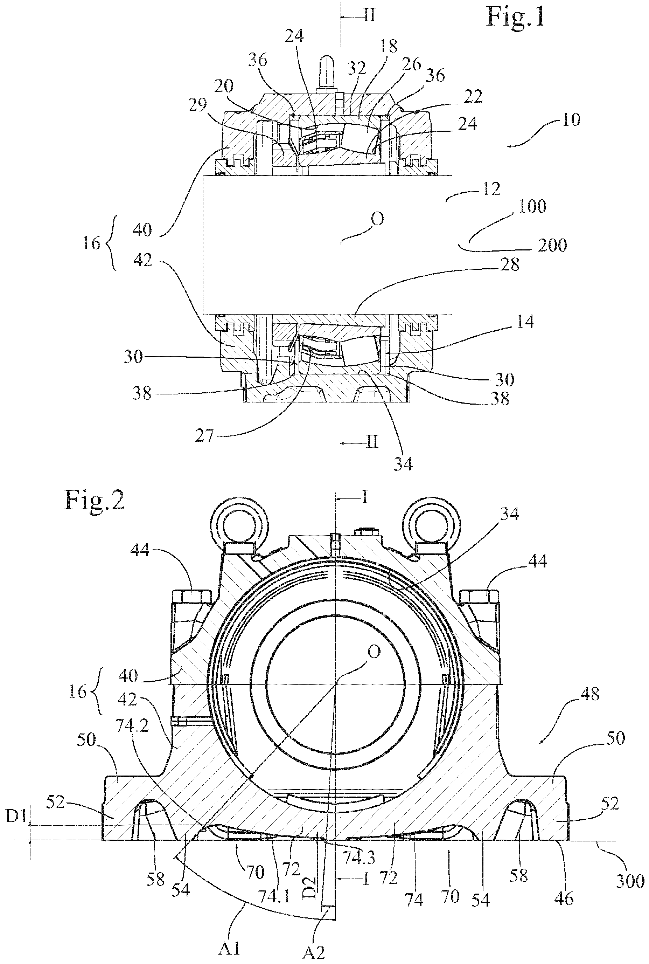

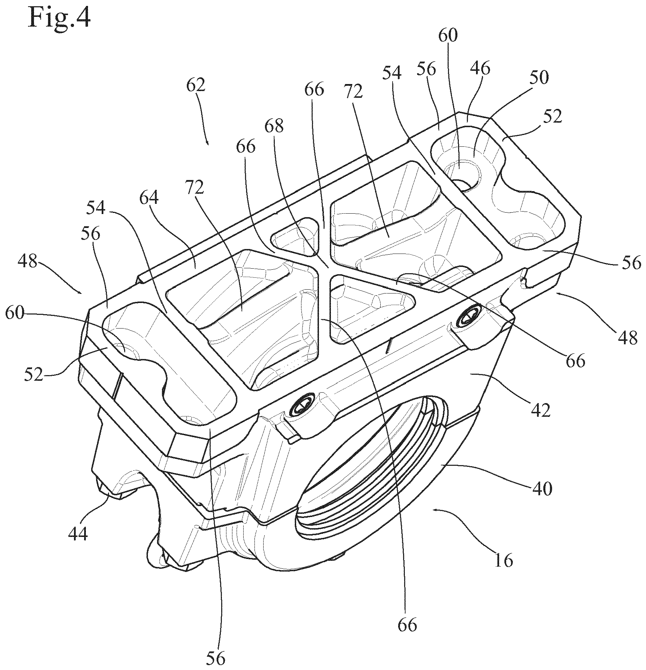

With reference to Figs. **1** to **4,** a bearing assembly **10** for guiding a rotating shaft **12** in rotation about a rotation axis **100** includes a bearing **14** fitted onto the shaft **12** and a pedestal bearing housing **16** for affixing the bearing assembly **1** to a planar surface of a base (not shown).

The bearing 14 illustrated in the drawings is a spherical roller bearing which consists of a single outer ring **18** provided with a single spherical raceway **20,** a single inner ring **22** provided with two spherical raceways **24,** two rows of rolling bodies **26,** in this case spherical rollers, and one or two cages **27** for guiding the rolling bodies **26.** The inner ring **22** has a tapered inner face and is force-fitted onto the shaft **12** by means of a slit tapered sleeve **28** and of a nut **29.** In the illustrated embodiment, the outer ring **18** has two end faces **30** at equal distance of a centre of rotation **O** of the bearing and an external cylindrical face **32,** which is press-fitted into a cylindrical bearing seat **34** provided in the pedestal bearing housing **16.** The axial position of the outer ring **18** can be secured by one or two spacer rings **36,** each inserted between one of the end faces **30** and an end shoulder **38** of the bearing seat **34.** The revolution axis **200** defined by the cylindrical bearing seat will be a reference axis for the entire description. As is well known in the art, the spherical roller bearing **14** allows a degree of rotation of the rotation axis **100** of the shaft about the centre of rotation **O** and the particular position illustrated in Fig. **1,** with the rotation axis **100** aligned with the revolution axis **200,** is only one particular position. The section plane **II-II** of Fig. **2** is perpendicular to the revolution axis **200** and contains the centre of rotation **O** of the bearing. This transversal reference plane **II-II** is at equal distance from the two end faces **30** of the outer ring **18** and at equal distance of the shoulders **38** of the bearing seat **34.**

The pedestal bearing housing **16** is preferably made of ductile cast iron and consists of two parts, namely a cap **40** and a pedestal **42** fixed to one another by any convenient means, preferably by detachable fixing elements such as bolts **44.** The bearing seat **34** is defined by internal surfaces of the cap **40** and pedestal **42.** The pedestal **42** has a planar support surface **46,** which lies in a support plane **300** parallel to the revolution axis, and is intended to rest on a planar face of a base or foundation. The median longitudinal plane **I-I,** which contains the revolution axis **200** and is perpendicular to the support plane **300,** is a plane of symmetry of the bearing seat **34.**

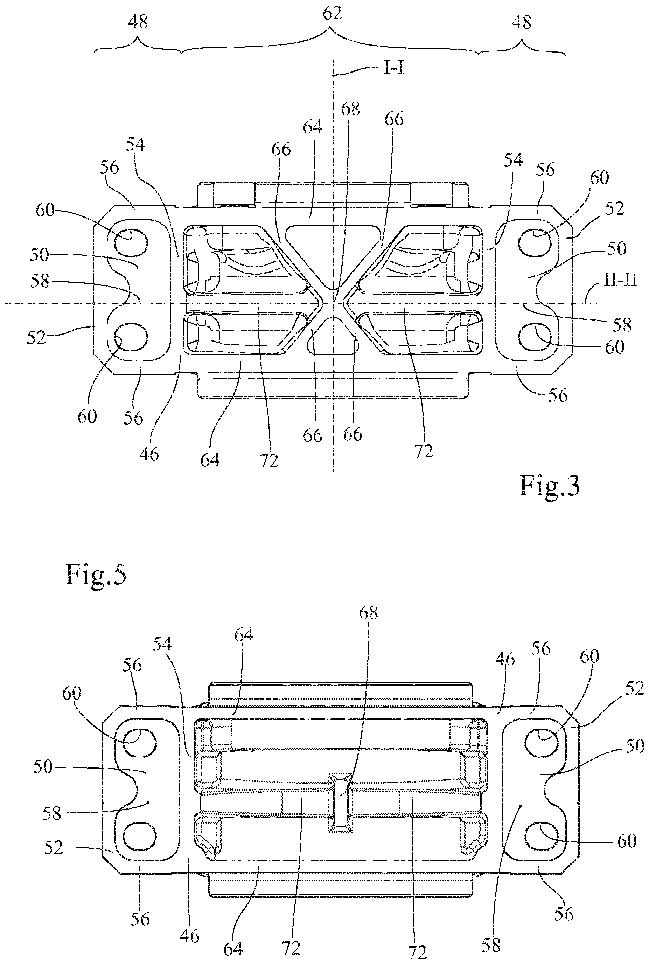

The pedestal **42** comprises two attachment flange portions **48** protruding on opposite sides of the median longitudinal plane **I-I.** As shown in particular in Fig. **3,** each of the two attachment flange portions **48** includes an upper flange wall **50** protruding away from the median longitudinal plane **I-I** and substantially perpendicular to the median longitudinal plane **I-I,** an outer longitudinal supporting wall **52** and an inner longitudinal supporting wall **54** extending in a direction parallel to the median longitudinal plane **I-I,** and two outer transverse supporting walls **56** each extending between the outer longitudinal supporting wall **52** to the inner longitudinal supporting wall **54.** The outer longitudinal supporting wall **52,** inner longitudinal supporting wall **54** and outer transverse walls **56** extend from the upper flange wall **50** towards the support plane **300** and have edges that lie in the support plane to form parts of the planar support surface **46** of the pedestal. A flange cavity **58** is provided between the outer longitudinal supporting wall **52,** upper flange wall **50,** inner longitudinal supporting wall **54,** outer transverse walls **56** and support plane **300.** The upper flange wall **50** is provided with two through holes **60,** which open into the flange cavity **58,** each with a hole axis perpendicular to the support plane **300.** These through holes **60** are suitable intended for inserting bolts or other fixing elements (not shown) for securing the bearing assembly **10** to a base or foundation.

The pedestal further includes an intermediate portion **62** between the two flange portions **48.** The intermediate portion **62** includes two intermediate outer transverse walls **64** each parallel or substantially coplanar with one of the two outer transverse walls **56** of each of the two flange portions **48,** and four inner reinforcing walls **66** each extending from one of the two intermediate outer transverse walls **64** to a common median foot **68** to form a cross. The median foot is located at the intersection between the longitudinal median plane **II-II** and the transversal reference plane **I-I,** i.e. directly below the centre of rotation **O** of the bearing. The median foot **68** protrudes towards the support plane **300** and has a median support face that lies in the support plane and is part of the planar support surface **46.** The four slanted inner reinforcing walls **66** are each at an angle of between 30° and 60° to the outer intermediate transverse walls **64** (i.e. two adjacent inner reinforcing walls **66** are at an angle of between 60° and 120° with one another). The intermediate outer transverse walls **64** and inner reinforcing walls **66** extend from the bearing seat **34** towards the support plane **300** and have edges that lie in the support plane **300** to form part of the planar support surface **46** of the pedestal **42.** Intermediate cavities **70** are formed between the intermediate outer transverse walls **64,** the inner longitudinal wall **54** of each of the two flange portions **48,** and the inner reinforcing walls **66.**

Because of the nut **29** received within the pedestal bearing housing **16** for fixing the inner ring **22** of the bearing **14** onto the shaft **12,** the bearing **14** is slightly offset in the axial direction with respect to the bearing housing. In other words, the transversal reference plane **II-II** is offset with respect to the pedestal, i.e. it is closer to one of the two outer transverse walls **56** of each of the two flange portions **48** than to the other one of the two outer transverse walls **56** of each of the two flange portions **48.**

The pedestal bearing housing **16** further comprises two transverse ribs **72** each extending in the transversal reference plane **II-II** from the bearing seat **34** to the inner longitudinal supporting wall **54** of a respective one of the two flange portions **48.** More specifically, each of the two ribs **72** extends from the inner longitudinal supporting wall **54** of the respective one of the two flange portions **48** to the median foot **68.** Each of the two transverse ribs **72** has a lower free edge **74** that lies at a distance from the support plane **300.** As shown in Fig. **2,** the lower free edge **74** of each of the two transverse ribs has a curved cross-section in the transversal reference plane **II-II** with a convex intermediate portion **74.1** between to concave end **74.2, 74.3** portions, which reach the support plane **300** preferably at an angle of more than 45°. The maximal distance **D1** between the support plane **300** and the free edge **74** is found in the concave portion **74.2.** The minimal distance **D2** between the convex intermediate portion **74.1** and the support plane **300** is found in a transition zone between the convex intermediate portion **74.1** and the concave end portion **74.3.** Depending on the size of the pedestal bearing housing, the ration D1/D2 is between 3 and 7. The two transverse ribs **72** are effective to transfer load from the bearing seat **34** to the inner longitudinal walls **54,** without substantially increasing the stress in the region of the upper flange wall **50** and of the through holes **60.** Hence, the stress, which would be too high in the region of the upper flange wall **50** without the transverse ribs **72,** lies within limits that ensure an indefinite operating life to the pedestal housing. Each transverse rib **72** spans an angle **A1,** measured in the transversal reference plane **II-II** from the median longitudinal plane **I-I** to the inner longitudinal supporting wall **54,** of preferably more than 35° and less than 55°, in the present case of approximately 43°. The median foot **68** on the other hand spans and angle **A2,** measured in the transversal reference plane **II-II** from the median longitudinal plane **I-I** to the inner longitudinal beginning of the transverse rib **72,** of preferably more than 3° but less than 10°, in the illustrated embodiment about 3,5°. The median longitudinal plane **I-I** is a plane of symmetry for the planar support surface **46** of the pedestal **42** and for the transverse ribs **72,** and preferably for the outer longitudinal supporting walls **52,** inner longitudinal supporting walls **54,** upper flange walls **50** and preferably for the outer transverse walls **56,** intermediate outer transverse walls **64** and inner reinforcing walls **66.**

In the variant of Fig. **5,** the slanted inner reinforcing walls are omitted and the arched transverse ribs **72** extend from the bearing seat **34** to the inner longitudinal supporting wall **54** of the respective one of the two flange portions **48** and to the median foot **68,** which protrudes towards the support plane **300** and has a median support surface that lies in the support plane and is part of the planar support surface **46.**

Experimental results show that the ribs have a significant influence on the rigidity and deformation in particular when radial load is applied in a direction globally in the transverse reference plane II, but significantly offset with respect to a 0° direction defined as the radial direction towards the median foot **68,** e.g. in a radial direction towards one of the inner longitudinal supporting walls **54.**

A number of other variants are contemplated within the scope of the claims. In particular, the transverse reference plane **II-II** can be at mid-distance of the two outer transverse walls **56** of each flange portions **48.** The intermediate outer transverse walls **64** can be dispensed with, or can have a free edge that remains at a distance from the support plane **300,** in which case they operate like bridges between the two flange portions **48** without transmitting load to the base to which the pedestal is fixed. The bearing housing **16** can be made in one piece, or in more than two parts, in any suitable material, including e.g. grey cast iron, ductile cast iron, or cast aluminium.

The bearing **14** can be of any type, including spherical and non-spherical bearings, plain bearings and rolling bearings with rolling bodies **26** of any kind, including tapered, cylindrical, barrel or spherical rollers, balls and needles or combinations thereof, with one or more rows of rolling bodies, one or more outer rings and one or more inner rings. The inner ring can be force-fitted or otherwise fixed onto the shaft by any means. The outer ring can be omitted, in which case the bearing seat **34** is a bearing raceway or, if the bearing is a slide bearing, a slide bearing surface. Similarly, the inner ring can be omitted, and the inner raceway (in the case of a roller bearing) or inner slide bearing surface (in the case of a plain bearing) can be formed directly on the shaft. The bearing seat **34** can have a cylindrical shape, a stepped cylindrical shape, a conical shape, with or without splines.

## Claims

1. A pedestal bearing housing (16) comprising a bearing seat (34), two attachment flange portions (48) extending between the bearing seat (34) and a support plane (300), the two attachment flange portions (48) protruding on opposite sides of a median longitudinal plane (I-I) perpendicular to the support plane (300), each of the two attachment flange portions (48) including an upper flange wall (50) protruding away from the median longitudinal plane (I-I), an outer longitudinal supporting wall (52) and an inner longitudinal supporting wall (54) extending in a direction parallel to the median longitudinal plane (I-I), and two outer transverse supporting walls (56) each extending from the outer longitudinal supporting wall (52) to the inner longitudinal supporting wall (54), the outer longitudinal supporting wall (52), inner longitudinal supporting wall (54) and outer transverse walls (56) extending from the upper flange wall (50) towards the support plane (300) and having edges that lie in the support plane (300) to form at least part of a planar support surface (46) of the pedestal bearing housing (16), a flange cavity (58) being provided between the upper flange wall (50), outer longitudinal supporting wall (52), inner longitudinal supporting wall (54), outer transverse walls (56) and support plane (300), the upper flange wall (50) being provided with at least one through hole (60) which opens into the flange cavity (58), **characterised in that** the pedestal bearing housing (16) further comprises two transverse ribs (72) each extending at least from the bearing seat (34) to the inner longitudinal supporting wall (54) of a respective one of the two flange portions (48), in a common transversal reference plane (II-II) perpendicular to the median longitudinal plane (I-I) and to the support plane (300) and located between the two outer transverse supporting walls (56) of each of the two flange portions (48).

2. The pedestal bearing housing (16) of claim 1, **characterised in that** each of the two transverse ribs (72) has a lower free edge (74) that lies at a distance from the support plane (300).

3. The pedestal bearing housing of claim 2, **characterised in that** the lower free edge (74) of each of the two transverse ribs (72) has a curved cross section in the transversal reference plane (II-II).

4. The pedestal bearing housing (16) of claim 3, further comprising an intermediate portion (62) extending between the bearing seat (34) and the support plane (300) and between the two flange portions (48), wherein the intermediate portion (62) includes at least a median foot (68) protruding from the bearing seat (34) towards the support plane (300), the median foot (68) having a median support surface that lies in the support plane (300) and is part of the planar support surface (46), and wherein each of the two transverse ribs (72) extends from the inner longitudinal supporting wall (54) of the respective one of the two flange portions (48) to the median foot (68).

5. The pedestal bearing housing of claim 4, **characterised in that** the lower free edge (74) of each of the two transverse ribs (72) has a convex intermediate portion, a concave end portion between the convex intermediate portion and the median foot (48) and a concave end portion between the convex intermediate portion and the inner longitudinal supporting wall (54) of the respective one of the two flange portions (48).

6. The pedestal bearing housing (16) of any one of claims 4 to 5, **characterised in that** the intermediate portion (62) further includes two intermediate outer transverse walls (64) each extending from one of the two flange portions (48) to the other of the two flange portions (48), wherein the median foot (68) lies between the two intermediate outer transverse walls (64) and wherein one or more intermediate cavities (70) are provided between the intermediate outer transverse walls (64) and the inner longitudinal wall (54) of each of the two flange portions (48), and, preferably, the two intermediate outer transverse walls (64) extend from the bearing seat (34) towards the support plane (300) and have edges that lie in the support plane (300) to form part of the planar support surface (46).

7. The pedestal bearing housing (16) of claim 6, **characterised in that** the intermediate portion (62) further includes at least two inner reinforcing walls (66) each extending from one of the two intermediate outer transverse walls (64) to the median foot (68).

8. The pedestal bearing housing (16) of claim 7, **characterised in that** the at least two inner reinforcing walls (66) extend from the bearing seat (34) towards the support plane (300) and have edges that lie in the support plane (300) to form part of the planar support surface (46).

9. The pedestal bearing housing (16) of claim 7 or claim 8, **characterised in that** the at least two inner reinforcing walls (66) include at least two slanted inner reinforcing walls (66) each at an angle of between 30° and 60° to the outer intermediate transverse walls (64), and preferably at least four slanted inner reinforcing walls (66) each at an angle of between 30° and 60° to the outer intermediate transverse walls (64) and forming a cross.

10. The pedestal bearing housing (16) of any one of the preceding claims, **characterised in that** the bearing seat (34) has two axial ends (38), located on each side and at equal distance of the transversal reference plane (II-II).

11. The pedestal bearing housing (16) of any one of the preceding claims, **characterised in that** the transversal reference plane (II-II) is not at equal distance of the two outer transverse walls (56) of each of the two flange portions (48).

12. The pedestal bearing housing (16) of any one of the preceding claims, **characterised in that** the pedestal bearing housing (16) comprises a cap (40) and a pedestal (42), which comprises the pedestal flange portions (48), the cap (40) and pedestal (42) being fixed to one another, preferably by removable fastening elements (44), the bearing seat (34) formed by walls of the cap (40) and pedestal (42).

13. A bearing assembly (10) comprising the pedestal bearing housing (16) of any one of the preceding claims and at least one outer bearing ring (18) fitted into the bearing seat (34).

14. The bearing assembly (10) of claim 13, **characterised in that** the outer bearing ring (18) has a spherical race (20) having a centre (O) located in the transversal reference plane (II-II).

15. The bearing assembly (10) of claim 13 or claim 14, **characterised in that** the outer bearing ring (18) has two end walls (30) at equal distance from the transversal reference plane (II-II).

**Patentansprüche**

1. Blocklagergehäuse (16), umfassend einen Lagersitz (34), zwei Befestigungsflanschabschnitte (48), die sich zwischen dem Lagersitz (34) und einer Trägerebene (300) erstrecken, wobei die zwei Befestigungsflanschabschnitte (48) an entgegengesetzten Seiten einer medianen Längsebene (I-I), die lotrecht zu der Trägerebene (300) ist, hervorstehen, wobei jeder der zwei Befestigungsflanschabschnitte (48) eine obere Flanschwand (50) einschließt, die von der medianen Längsebene (I-I) weg hervorsteht, wobei sich eine äußere Längsträgerwand (52) und eine innere Längsträgerwand (54) in einer zur medianen Längsebene (I-I) parallelen Richtung erstrecken und die zwei äußeren transversalen Trägerwände (56) sich jeweils von der äußeren Längsträgerwand (52) zur inneren Längsträgerwand (54) erstrecken, wobei die äußere Längsträgerwand (52), die innere Längsträgerwand (54) und die äußeren transversalen Wände (56) sich von der oberen Flanschwand (50) zur Trägerebene (300) hin erstrecken und Kanten aufweisen, die in der Trägerebene (300) angeordnet sind, um wenigstens eine ebene Trägerfläche (46) des Blocklagergehäusese (16) zu formen, wobei eine Flanschvertiefung (58) zwischen der oberen Flanschwand (50), der äußeren Längsträgerwand (52), der inneren Längsträgerwand (54), den äußeren transversalen Wänden (56) und der Trägerebene (300) bereitgestellt ist, wobei die obere Flanschwand (50) mit wenigstens einer Durchgangsbohrung (60) bereitgestellt ist, die sich in die Flanschvertiefung (58) öffnet, **dadurch gekennzeichnet, dass** das Blocklagerhäuse (16) weiterhin zwei transversale Rippungen (72) umfasst, die sich jeweils wenigstens vom Lagersitz (34) zu der inneren Längsträgerwand (54) jeweils eines der zwei Flanschabschnitte (48) in einer zur medianen Längsebene (I-I) und der Trägerebene (300) lotrechen gemeinsamen transversalen Referenzeben (II-II) erstreckt und zwischen den zwei äußeren transversalen Trägerwänden (56) jedes der zwei Flanschabschnitte (48) angeordnet ist.

2. Blocklagergehäuse (16) gemäß Anspruch 1, **dadurch gekennzeichnet, dass** jede der zwei transversalen Rippungen (72) eine freie untere Kante (74), die in einer Entfernung von der Trägerebene (300) angeordnet ist, aufweist.

3. Blocklagergehäuse gemäß Anspruch 2, **dadurch gekennzeichnet, dass** die untere freie Kante (74) jeder der zwei transversalen Rippungen (72) einen gekrümmten Querschnitt in der transversalen Referenzebene (II-II) aufweist.

4. Blocklagergehäuse (16) gemäß Anspruch 3, weiterhin umfassend einen Zwischenabschnitt (62), der sich zwischen dem Lagersitz (34) und der Trägerebene (300) und zwischen den zwei Flanschabschnitten (48) erstreckt, wobei der Zwischenabschnitt (62) wenigstens einen medianen Fuß (68) einschließt, der aus dem Trägersitz (34) zu der Trägerebene (300) hervorsteht, wobei der mediane Fuß (68) eine mediane Trägerfläche aufweist, die in der Trägerebene (300) angeordnet ist und Teil der ebenen Trägerfläche (46) ist und wobei jede der zwei transversalen Rippungen (72) sich von der inneren Längsträgerwand (54) des jeweiligen einen der zwei Flanschabschnitte (48) zum medianen Fuß (68) erstreckt.

5. Blocklagergehäuse gemäß Anspruch 4, **dadurch gekennzeichnet, dass** die untere freie Kante (74) jeder der zwei transversalen Rippungen (72) einen konvexen Zwischenabschnitt, einen konkaven Endabschnitt zwischen dem konvexen Zwischenschnitt und dem medianen Fuß (48) und einen konkaven Endabschnitt zwischen dem konvexen Zwischenabschnitt und der inneren Längsträgerwand (54) des jeweiligen einen der zwei Flanschabschnitte (48) aufweist.

6. Blocklagergehäuse (16) gemäß Anspruch 4 oder 5, **dadurch gekennzeichnet, dass** der Zwischenabschnitt (62) weiterhin zwei äußere transversale Zwischenwände (64) einschließt, die sich jeweils von einem der zwei Flanschabschnitte (48) zu dem anderen der zwei Flanschabschnitte (48) erstreckt, wobei der mediane Fuß (68) zwischen den zwei äußeren transversalen Zwischenwänden (64) liegt und wobei eine oder mehrere Zwischenvertiefungen (70) zwischen den äußeren transversalen Zwischenwänden (64) und der inneren Längswand (54) jedes der zwei Flanschabschnitte (48) angeordnet sind und, bevorzugt, die zwei äußeren transversalen Zwischenwände (64) sich von dem Lagersitz (34) zur Trägerebene (300) erstrecken und Kanten aufweisen, die in der Trägerebene (300) angeordnet sind, um einen Bestandteil der ebenen Trägerfläche (46) zu bilden.

7. Blocklagergehäuse (16) gemäß Anspruch 6, **dadurch gekennzeichnet, dass** der Zwischenabschnitt (62) weiterhin wenigstens zwei innere Verstärkungswände (66) einschließt, die sich jeweils von einer der zwei äußeren transversalen Zwischenwände (64) zum medianen Fuß (68) erstrecken.

8. Blocklagergehäuse (16) gemäß Anspruch 7, **dadurch gekennzeichnet, dass** wenigstens zwei innere Verstärkungswände (66) sich vom Lagersitz (34) zur Trägerebene (300) erstrecken und Kanten aufweisen, die in der Trägerebene (300) angeordnet sind, um einen Bestandteil der ebenen Trägerfläche (46) zu formen.

9. Blocklagergehäuse (16) gemäß Anspruch 7 oder Anspruch 8, **dadurch gekennzeichnet, dass** wenigstens zwei innere Verstärkungswände (66) wenigstens zwei geneigte innere Verstärkungswände (66), jede in einem Winkel zwischen 30° und 60° zur äußeren transversalen Zwischenwand (64) und bevorzugt wenigstens vier geneigte innere Verstärkungswände (66), jede in einem Winkel zwischen 30° und 60° zu den äußeren transversalen Zwischenwänden (64) einschließen, und ein Kreuz formen.

10. Blocklagergehäuse (16) gemäß irgendeinem der voranstehenden Ansprüche, **dadurch gekennzeichnet, dass** der Lagersitz (34) zwei axiale Enden (38) aufweist, die auf jeder Seite und in gleichem Abstand der transversalen Referenzebene (II-II) angeordnet sind.

11. Blocklagergehäuse (16) gemäß irgendeinem der voranstehenden Ansprüche, **dadurch gekennzeichnet, dass** die transversale Referenzebene (II-II) nicht in einer gleichen Entfernung der zwei äußeren transversalen Wände (56) jedes der zwei Flanschabschnitte (48) ist.

12. Blocklagergehäuse (16) gemäß irgendeinem der voranstehenden Ansprüche, **dadurch gekennzeichnet, dass** das Blocklagergehäuse (16) einen Aufsatz (40) und ein Lagergehäuse (42) umfasst, das die Lagergehäuse-Flanschabschnitte (48) umfasst, wobei der Aufsatz (40) und das Lagergehäuse (42) aneinander bevorzugt durch abnehmbare Befestigungselemente (44) befestigt sind, wobei der Lagersitz (34) durch Wände des Aufsatzes (40) und des Lagergehäuses (42) geformt ist.

13. Lageranordnung (10), umfassend das Blocklagergehäuse (16) gemäß irgendeinem der voranstehenden Ansprüche und wenigstens einen äußeren Lagerring (18), der in den Lagersitz (34) eingepasst ist.

14. Lageranordnung (10) gemäß Anspruch 13, **dadurch gekennzeichnet, dass** der äußere Lagerring (18) eine kugelförmige Laufbahn (20) mit einem Zentrum (O) aufweist, das in der transversalen Referenzebene (II-II) angeordnet ist.

15. Lageranordnung (10) gemäß Anspruch 13 oder Anspruch 14, **dadurch gekennzeichnet, dass** der äußere Lagerring (18) zwei Endwände (30) in gleicher Entfernung von der transversalen Referenzebene (II-II) aufweist.

**Revendications**

1. Boîtier de palier support (16) comprenant un siège de palier (34), deux parties de bride de fixation (48) s'étendant entre le siège de palier (34) et un plan de support (300), les deux parties de bride de fixation (48) faisant saillie sur des côtés opposés d'un plan longitudinal central (I-I), perpendiculaire au plan de support (300), chacune des deux parties de bride de fixation 48) comprenant une paroi de bride supérieure (50) faisant saillie de façon à s'éloigner du plan longitudinal central (I-I), une paroi de support longitudinale externe (52) et une paroi de support longitudinale interne (54) s'étendant dans une direction parallèle au plan longitudinal central (I-I), et deux parois de support transversales externes (56) s'étendant chacune de la paroi de support longitudinale externe (52) à la paroi de support longitudinale interne (54), la paroi de support longitudinale externe (52), la paroi de support longitudinale interne (54) et les parois transversales externes (56) s'étendant à partir de la paroi de bride supérieure (50) vers le plan de support (300) et ayant des bords qui se trouvent dans le plan de support (300) de façon à constituer au moins une partie d'une surface de support plane (46) du boîtier de palier support (16), une cavité de bride (58) étant située entre la paroi de bride supérieure (50), la paroi de support longitudinale externe (52), la paroi de support longitudinale interne (54), les parois transversales externes (56) et le plan de support (300), la paroi de bride supérieure (50) étant pourvue d'au moins un trou traversant (60) qui s'ouvre dans la cavité de bride (58), **caractérisé en ce que** le boîtier de palier support (16) comprend, en outre, deux nervures transversales (72) s'étendant chacune au moins du siège de palier (34) à la paroi de support longitudinale interne (54) d'une partie respective des deux parties de bride (48), dans un plan de référence transversal commun (II-II) perpendiculaire au plan longitudinal central (I-I) et au plan de support (300), et situé entre les deux parois de support transversales externes (56) de chacune des deux parties de bride (48).

2. Boîtier de palier support (16) de la revendication précédente, **caractérisé en ce que** chacune des deux nervures transversales (72) possède un bord libre inférieur (74) qui se trouve à une certaine distance du plan de support (300).

3. Boîtier de palier support de la revendication 2, **caractérisé en ce que** le bord libre inférieur (74) de chacune des deux nervures transversales (72) comporte une section courbe dans le plan de référence transversal (II-II).

4. Boîtier de palier support (16) de la revendication 3, comprenant, en outre, une partie intermédiaire (62) s'étendant entre le siège de palier (34) et le plan de support (300) et entre les deux parties de bride (48), dans lequel la partie intermédiaire (62) comprend au moins un pied central (68) faisant saillie du siège de palier (34) vers le plan de support (300), le pied central (68) possédant une surface de support centrale qui se trouve dans le plan de support (300) et fait partie de la surface de support plane (46), et dans lequel chacune des deux nervures transversales (72) s'étend de la paroi de support longitudinale interne (54) de la partie respective des deux parties de bride (48) au pied central (68).

5. Boîtier de palier support (16) de la revendication 4, **caractérisé en ce que** le bord libre inférieur (74) de chacune des deux nervures transversales (72) possède une partie intermédiaire convexe, une partie d'extrémité concave entre la partie intermédiaire convexe et le pied central (48) et une partie d'extrémité concave entre la partie intermédiaire convexe et la paroi de support longitudinal interne (54) de la partie respective des deux parties de bride (48).

6. Boîtier de palier support (16) de l'une quelconque des revendications 4 à 5, caractérisé en que la partie intermédiaire (62) comprend en outre deux parois transversales internes intermédiaires (64) s'étendant chacune de l'une des deux parties de bride (48) à l'autre des deux parties de bride (48), dans lequel le pied central (68) se trouve entre les deux parois transversales externes intermédiaires (64) et dans lequel une ou plusieurs cavités intermédiaires (70) sont prévues entre les parois transversales externes intermédiaires (64) et la paroi longitudinale interne (54) de chacune des deux parties de bride (48), et, de préférence,@ les deux parois transversales externes intermédiaires (64) s'étendent du siège de palier (34) vers le plan de support (300) et possèdent des bords qui se trouvent dans le plan de support (300) pour former une partie de la surface de support plane (46) .

7. Boîtier de palier support (16) de la revendication 6, **caractérisé en ce que** la partie intermédiaire (62) comprend, en outre, au moins deux parois de renfort internes (66) s'étendant chacune d'une des deux parois transversales externes intermédiaires (64) au plan central (68).

8. Boîtier de palier support (16) de la revendication 7, **caractérisé en ce que** les au moins deux parois de renfort internes (66) s'étendent du siège de palier (34) vers le plan de support (300) et possèdent des bords qui se trouvent dans le plan de support (300) pour former une partie de la surface de support plane (46).

9. Boîtier de palier support (16) de la revendication 7 ou 8, **caractérisé en ce que** les au moins deux parois de renfort internes (66) comprennent au moins deux parois de renfort internes inclinées (66), chacune à un angle compris entre 30° et 60° vers les parois transversales intermédiaires externes (64), et de préférence, au moins quatre parois de renfort internes inclinées (66) chacune à un angle compris entre 30° et 60° vers les parois transversales intermédiaires externes (64),et formant une croix.

10. Boîtier de palier support (16) de l'une quelconque des revendications précédentes, **caractérisé en ce que** le siège de palier (34) comporte deux extrémités axiales (38) placées de chaque côté, et à distance égale du plan de référence transversal (II-II) .

11. Boîtier de palier support (16) de l'une quelconque des revendications précédentes, **caractérisé en ce que** le plan de référence transversal (II-II) ne se trouve pas à égale distance des deux parois transversales externes (56) de chacune des deux parties de bride (48)

12. Boîtier de palier support (16) de l'une quelconque des revendications précédentes, **caractérisé en ce que** le boîtier de palier support (16) comprend un chapeau (40) et un support (42), qui comprend les parties de bride de support (48), le chapeau (40) et le support (42) étant fixés l'un à l'autre, de préférence par des éléments de fixation amovibles (44), le siège de palier (34) étant formé par des parois du chapeau (40) et du support (42).

13. Ensemble de palier (10) comprenant le boîtier de palier support (16) de l'une quelconque des revendications précédentes, et au moins une bague de roulement externe (18) montée dans le siège de palier (34) .

14. Ensemble de palier (10) de la revendication 13, **caractérisé en ce que** la bague de roulement externe (18) comporte un chemin de roulement (20) ayant un centre (O) situé dans le plan de référence transversal (II-II) .

15. Ensemble de palier (10) de la revendication 13 ou de la revendication 14, **caractérisé en ce que** la bague de roulement externe (18) comporte deux parois d'extrémité (30) à égale distance du plan de référence transversal (II-II).

EP 3 280 924 B1

Fig.1

Fig.2

Fig.3

Fig.5

Fig.4

**EP 3 280 924 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013085448 A
- CN 202012574 U